# EUROPEAN PATENT APPLICATION

(11) **EP 4 497 497 A1**
(43) Date of publication of application: **29.01.2025**
(21) Application number: 23187180.7
(22) Date of filing: 24.07.2023
(51) Int. Cl.: B01J 19/00

(54) **HIGH-PRESSURE POLYMERIZATION SYSTEM AND HIGH-PRESSURE POLYMERIZATION PROCESS FOR THE POLYMERIZATION OF ETHYLENICALLY UNSATURATED MONOMERS**

(71) Applicant: Basell Polyolefine GmbH, 50389 Wesseling (DE)
(72) Inventor: KHAYRULLIN, Danir, 65926 Frankfurt/M. (DE); MOHRBUTTER, Juergen, 65926 Frankfurt/M. (DE); WOLF, Christoph, 65926 Frankfurt/M. (DE); FINETTE, Andre-Armand, 65926 Frankfurt/M. (DE); DEUERLING, Michael, 65926 Frankfurt/M. (DE)
(74) Representative: LyondellBasell

(57) **Abstract**

A high-pressure polymerization system comprising a) a continuously operable polymerization reactor having a reactor inlet and having a reactor outlet and b) a reactor blow down system adapted and arranged to be in fluid communication with the polymerization reactor, the reactor blow down system comprising b1) a reactor blow down vessel, which contains an aqueous quenching medium, b2) one or more release lines, which connect the polymerization reactor with the reactor blow down vessel and which comprise a release line outlet for expanding a content of the high-pressure polymerization system comprising polymer and gaseous components into the reactor blow down vessel, where the release line outlets are located above a maximum level for the aqueous quenching medium, and wherein the one or more release lines are provided with a rupture disc that automatically allows the content of the high-pressure polymerization system to pass through the one or more release lines into the reactor blow down vessel, if a predetermined pressure threshold in the reactor is exceeded.

## Description

### FIELD OF THE DISCLOSURE

The present disclosure relates to a high-pressure polymerization system for the polymerization of ethylenically unsaturated monomers and to a high-pressure polymerization process for the polymerization of ethylenically unsaturated monomers to obtain an ethylene-based polymer in a high-pressure polymerization system comprising a continuously operated polymerization reactor.

### BACKGROUND OF THE DISCLOSURE

Polyethylene is the most widely used commercial polymer. It can be prepared by a couple of different processes. Polymerization in the presence of free-radical initiators at elevated pressures was the method first discovered to obtain polyethylene and continues to be a valued process with high commercial relevance for the preparation of low density polyethylene (LDPE).

A common set-up of a plant for preparing low density polyethylene comprises, besides a polymerization reactor which can be an autoclave or a tubular reactor or a combination of such reactors, further equipment. For pressurizing the reaction components usually a set of two compressors, a primary compressor and a secondary compressor, which is sometimes designated as hyper compressor, is used. At the end of the polymerization sequence, a high-pressure polymerization unit normally further includes apparatuses like extruders and granulators for pelletizing the obtained polymer. Furthermore, such a polymerization unit generally also comprises systems for feeding monomers and comonomers, free-radical initiators, modifiers or other substances at one or more positions to the polymerization reaction. Plants for preparing polyethylene are regularly constructed in a manner to be run continuously for long periods of time without any signs of fatigue, thus, in general allowing rather long maintenance intervals.

The polymerization process in a LDPE reactor is carried out at high pressures which can reach 350 MPa. Such high pressure requires special technology for the process to be handled in a safe and reliable manner. It is known that under certain temperature and pressure conditions ethylene can decompose rapidly in an explosive manner to give soot, methane and hydrogen. Associated therewith is a drastic increase in pressure and temperature. The decomposition temperatures can be excessively high (>1000°C) which presents a considerable potential risk for the operational safety of the production plants. For example, the temperatures reached during such a decomposition event can damage the reactor tubes, e.g. it may cause the tube metal to austenize. At temperatures at which the metal austenizes, martensite is being formed in the reactor tubes, if the material is cooled rapidly. Martensite is the hardest and most brittle of the various microstructures found in carbon steels.

Therefore, rapid removal of the hot gas produced by decomposition and rapid reduction of the pressure is believed to be essential during emergency blowdown.

According to WO 2017/098389 A1, such rapid removal of hot gas shall be accomplished by a unidirectional blow down system comprising a front emergency blowdown valve located downstream from a hyper compressor discharge and in the front end of the reactor, and at least one additional valve at the end of the reactor. Here, the system shall prevent the reactor walls from reaching a temperature capable of causing the tube metal to austenize by maintaining flow in a single direction away from the hyper compressor during the blowdown process, and by maintaining specific pressure and flow velocity within the reactor during blowdown. In this manner the amount of heat transfer to the tube reactor shall be minimized.

In case of decomposition, the pressure and temperature in the reactor may increase too rapidly, such that an emergency blowdown valve or pressure relief valve may not be sufficient to counteract the decomposition and depressurize the high pressure polymerization system within a short time period.

Therefore, a continuing need exists to provide improved ethylene polymerization processes in a high-pressure polymerization system, which in case of a shutdown due to disturbances of the polymerization process such as temperature and/or pressure increase above safety thresholds allow a quicker and safer quenching of hot gas.

### SUMMARY OF THE DISCLOSURE

The present disclosure provides a high-pressure polymerization system comprising
a) a continuously operable polymerization reactor having a reactor inlet and having a reactor outlet and
b) a reactor blow down system adapted and arranged to be in fluid communication with the polymerization reactor, the reactor blow down system comprising
   b1) a reactor blow down vessel, which contains an aqueous quenching medium,
   b2) one or more release lines, which connect the polymerization reactor with the reactor blow down vessel and which comprise a release line outlet for expanding a content of the high-pressure polymerization system comprising polymer and gaseous components into the reactor blow down vessel, where the release line outlets are located above a maximum level for the aqueous quenching medium, and
   wherein the one or more release lines are provided with a rupture disc that automatically allows the content of the high-pressure polymerization system, in particular the content of the polymerization reactor, to pass through the one or more release lines into the reactor blow down vessel, if a predetermined pressure threshold in the reactor is exceeded.

In some embodiments, the one or more release lines are split into at least two arms, which are connected to the reactor blow down vessel, preferably at opposite sides. The one or more release lines may particularly be connected to the reactor blow down vessel diametrically to one another.

In some embodiments, the predetermined pressure threshold may be about 10 to 700, preferably 100 to 600, more preferably 200 to 500 bar less than a design pressure of the reactor.

In some embodiments, the total area of installed rupture discs per reactor volume may be about 0.003 to 0.050 m²/m³, preferably 0.004 to 0.025 m²/m³, more preferably 0.005 to 0.017 m²/m³.

In some embodiments, the number of rupture discs is about 1 to 9, preferably 1 to 6, more preferably 2 to 4.

In some embodiments, the reactor is an autoclave reactor or a combination of an autoclave reactor and a tubular reactor.

In some embodiments, the rupture disc is provided on an exchangeable module forming an end of the one or more release lines.

In some embodiments, the one or more release lines project into a radial opening of the reactor.

In some embodiments, the one or more release lines protrude into the reactor. In this case, the one or more release lines may further act as a support for a center bearing of the agitator shaft. For example, the center bearing may comprise some hooks which are attached to the end of the release lines. Preferably, the rupture disc is arranged at the end of the respective release line and thus may be arranged inside the reactor volume.

In some embodiments, the front surface of the rupture disc facing the reactor volume is arranged essentially flush with the inner surface of the reactor wall. The rupture disc may for example close the radial opening of the reactor and be flush with the inner reactor wall. In particular, the rupture disc may be arranged at the end of the release line connected to the reactor.

In some embodiments, an agitator may be provided, the agitator being coaxially mounted in the reactor, wherein the agitator is secured to the one or more release lines, or components of the one or more release line protruding into the reactor.

In some embodiments, the polymerization system may further comprise at least one second release line that is provided with one or more first emergency valves adapted to open and close a fluid communication between the polymerization reactor and the reactor blow down system.

In some embodiments, the at least one second release line may be provided downstream of the reactor and being connected to the reactor outlet.

In some embodiments, the reactor blow down vessel has an essentially circular design over a major portion P having a length L, a diameter D and a L/D-ratio in the range from 1.75 to 10.0

In some embodiments, the release lines or the arms of the release lines each have a joining piece, which has a central axis and which is arranged in a way that an angle (α) formed between the central axis of the joining piece and a tangent being located at the intersection of the central axis with the circular periphery of the major portion P of the reactor blow down vessel and having the same inclination as the central axis with respect to the horizontal plane containing this intersection is in the range from 5° to 70°.

In some embodiments, the joining pieces are arranged essentially tangentially with regard to the horizontal circumference of said major portion P.

In some embodiments, the reactor blow down vessel further comprises a vent stack containing a constricted section.

In some embodiments, the joining pieces are inclined downwards such that the stream of the content of the high-pressure polymerization system comprising polymer and gaseous components is directed towards a surface of the aqueous quenching medium in the reactor blow down vessel.

In some embodiments, an angle of inclination (β) between the central axis of the joining pieces and horizontal planes passing through the major portion P of the reactor blow down vessel at the positions where the central axis crosses the horizontal circumference of the major portion P is in the range from 3° to 89°.

In some embodiments, a multitude of release lines connects the polymerization reactor with the reactor blow down vessel.

In some embodiments, a multitude of the joining pieces of the release line outlets of the release lines connecting the polymerization reactor with the reactor blow down vessel are located on the same horizontal level of the major portion P of the reactor blow down vessel, and/or wherein a multitude of the joining pieces of the release line outlets of the release lines connecting the polymerization reactor with the reactor blow down vessel are equidistantly or evenly distributed over the circumference of the major portion P of the reactor blow down vessel.

In some embodiments, a first set of joining pieces of release line outlets of the release lines connecting the polymerization reactor with the reactor blow down vessel is located on the same horizontal level of the major portion P of the reactor blow down vessel, wherein at least one second set of joining pieces of release line outlets of the release lines connecting the polymerization reactor with the reactor blow down vessel is aligned horizontally on the major portion P of the reactor blow down vessel at a horizontal level different from the horizontal level of the first set of joining pieces.

In some embodiments, the high-pressure polymerization system further comprises
c) a pressure control valve,
d) a post reactor cooler, and
e) a separation vessel or a series of separation vessels,
wherein the post reactor cooler is in fluid communication with the continuously operated polymerization reactor via a first connecting line, wherein the separation vessel or the series of separation vessels is in fluid communication with the post reactor cooler via a second connecting line, and wherein the pressure control valve is adapted and arranged to control the fluid communication between the continuously operated polymerization reactor and the post reactor cooler.

In some embodiments, the vent stack is a vertical tube having an inner diameter from 0.4 m to 1.4 m and the constricted section of the vent stack has a smaller inner diameter so that the open cross-sectional area at the constricted section is from 10% to 60% of the open cross-sectional area of the vertical tube.

In some embodiments, the release lines which connect the polymerization reactor with the reactor blow down vessel are heated to a temperature from 160°C to 240°C.

In some embodiments, the reactor blow down system further comprises
b4) a nitrogen blanketing system and/or
b5) a fil-level control system.

In some embodiments, the reactor blow down system further comprises
b6) a reactor blow down dump vessel arranged and adapted to be in fluid communication with the reactor blow down vessel, and
b7) at least one drain valve in the fluid communication between the reactor blow down vessel and the reactor blow down dump vessel adapted and arranged to open or close the fluid communication between the reactor blow down vessel and the reactor blow down dump vessel,
wherein the reactor blow down vessel is installed above the reactor blow down dump vessel.

The present disclosure further provides a process for polymerizing ethylene, and optionally one or more co-monomers, to obtain an ethylene-based polymer in a high-pressure polymerization system as defined in the above comprising
A) monitoring the high-pressure polymerization system with respect to an occurrence of a disturbance, and
B) automatically releasing the content of the reactor into the reactor blow down vessel if a predetermined pressure threshold is exceeded;
C) contacting said content in the reactor blow down vessel with the aqueous quenching medium to obtain an aqueous polymer slurry; and
D) separating the aqueous polymer slurry and the gaseous components.

In some embodiments, the process further comprises
E) transferring the aqueous polymer slurry to a reactor blow down dump vessel by opening the at least one drain valve.

In some embodiments, upon the occurrence of a disturbance or temporally offset to the occurrence of a disturbance steam is injected into the reactor blow down vessel.

In some embodiments, the injection of steam is suspended after about 120 to 300 seconds upon the occurrence of a disturbance.

### BRIEF DESCRIPTION OF THE DRAWINGS

To assist those of ordinary skill in the relevant art in making and using the subject matter hereof, reference is made to the appended drawings, wherein:
- Fig. 1: shows a schematic set-up of a high pressure polymerization system according to an exemplary embodiment of the present disclosure;
- Fig. 2: shows a schematic set-up of a polymerization reactor being connected to a reactor blow down vessel via release lines;
- Fig. 3: shows schematically a set-up of a reactor blow down system of the present disclosure.

### DETAILED DESCRIPTION OF THE DISCLOSURE

The present disclosure provides a high-pressure polymerization system comprising
a) a continuously operable polymerization reactor having a reactor inlet and having a reactor outlet and
b) a reactor blow down system adapted and arranged to be in fluid communication with the polymerization reactor, the reactor blow down system.
The present disclosure further provides a process for polymerizing ethylene, and optionally one or more co-monomers, to obtain an ethylene-based polymer in the high-pressure polymerization system. The process allows in case of a disturbance, e.g. decomposition, to automatically and effectively quench the reactor content comprising both hot ethylene and hot polymer in a reactor blow down vessel.

In a preferred embodiment of the high-pressure polymerization system, the monomers are brought to the polymerization pressure by one or more compressors in a sequence of compression stages, the compressed monomers are optionally passed through a pre-heater or a pre-cooler and are then transferred into the polymerization reactor at the reactor inlet. In addition, a reaction mixture obtained by the polymerization leaves the reactor at the reactor outlet through a pressure control valve and is optionally cooled by a post reactor cooler. Subsequently, the reaction mixture is separated into polymeric and gaseous components in two or more stages, where the gaseous components separated off in a first stage at an absolute pressure of from 15 MPa to 50 MPa are recycled to the one or more compressors via a high-pressure gas recycle line and the gaseous components separated off in a second stage at an absolute pressure in the range of from 0.1 MPa to 0.5 MPa are recycled to the first stage of the sequence of compression stages via a low-pressure gas recycle line, and the polymeric components obtained by the polymerization are transformed into pellets.

Thus, in preferred embodiments, the high-pressure polymerization system further comprises
c) a pressure control valve,
d) a post reactor cooler, and
e) a separation vessel or a series of separation vessels,
wherein the post reactor cooler is in fluid communication with the continuously operated polymerization reactor via a first connecting line, wherein the separation vessel or the series of separation vessels is in fluid communication with the post reactor cooler via a second connecting line, and wherein the pressure control valve is adapted and arranged to control the fluid communication between the continuously operated polymerization reactor and the post reactor cooler.

It should be understood that the use of "and/or" is defined inclusively, such that the term "a and/or b" should be read to include the sets: "a and b", "a or b", "a", "b". Preferably, "and" in most cases "a and/or b" relates to two entities "a" and "b", wherein at least one of said entities is present in the embodiment described.

The polymerization is preferably a homopolymerization of ethylene or a copolymerization of ethylene with one or more other monomers, provided that these monomers are free-radically copolymerizable with ethylene under high pressure. Examples of copolymerizable monomers for use in the present technology are α,β-unsaturated C₃-C₈-carboxylic acids, derivatives of α,β-unsaturated C₃-C₈-carboxylic acids, e.g. unsaturated C₃-C₁₅-carboxylic esters or anhydrides, and 1-olefins. In addition, vinyl carboxylates, such as vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly suitable as comonomer.

In the case of copolymerization, the proportion of comonomer or comonomers in the reaction mixture is from 1 to 50% by weight, preferably from 3 to 40% by weight, based on the amount of monomers, i.e. the sum of ethylene and other monomers. Depending on the type of comonomer, it can be preferred to feed the comonomers at more than one point to the reactor set-up. Preferably the comonomers are fed to the suction side of the secondary compressor.

For the purposes of the present disclosure, polymers or polymeric materials are substances which are made up of at least two monomer units. The polymers or polymeric materials are preferably low density polyethylenes having an average molecular weight Mn of more than 20 000 g/mole. The term "low density polyethylene" (LDPE) includes ethylene homopolymers and ethylene copolymers. The process of the present disclosure can also be employed in the preparation of oligomers, waxes and polymers having a molecular weight Mₙ of less than 20 000 g/mole.

The process of the present disclosure is preferably a radical polymerization carried out in the presence of free-radical polymerization initiators. Possible initiators for starting the polymerization in the respective reaction zones are in general any substances that can produce radical species under the conditions in the polymerization reactor, for example, oxygen, air, azo compounds or peroxidic polymerization initiators. In a preferred embodiment of the disclosure, the polymerization is carried out by using oxygen, either fed in the form of pure O₂ or as air. In case of initiating the polymerization with oxygen, the initiator is normally first mixed with the ethylene feed and then fed to the reactor. In such a case, it is not only possible to feed a stream comprising monomer and oxygen to the beginning of the polymerization reactor but also to one or more points along the reactor creating two or more reaction zones. Initiation using organic peroxides or azo compounds also represents a preferred embodiment of the present disclosure. It is possible to use either individual initiators or preferably mixtures of various initiators. A large range of initiators, in particular peroxides, are commercially available, for example the products of Nouryon offered under the trade names Trigonox^{®} or Perkadox^{®}.

In the polymerization, the molecular weight of the polymers to be prepared can as usual be altered by the addition of modifiers which act as chain-transfer agents. Examples of modifiers for use in the present technology are hydrogen, aliphatic and olefinic hydrocarbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol. Particular preference is given to using saturated aliphatic aldehydes, in particular propionaldehyde or 1-olefins such as propene, 1-butene or 1-hexene, or aliphatic hydrocarbons such as propane.

The high polymerization is preferably carried out at pressures of from 110 MPa to 500 MPa, with pressures of from 160 MPa to 350 MPa being more preferred and pressures of from 200 MPa to 330 MPa being particularly preferred for polymerization in a tubular reactor and with pressures of from 110 MPa to 300 MPa being more preferred and pressures of from 120 MPa to 280 MPa being particularly preferred for polymerization in an autoclave reactor. The polymerization temperatures are preferably in the range of from 100°C to 350°C, and more preferably in the range of from 180°C to 340°C and particularly preferred from 200°C to 330°C for polymerization in a tubular reactor and more preferably in the range of from 110°C to 320°C and particularly preferred from 120°C to 310°C for polymerization in an autoclave reactor.

The polymerization can be carried out with all types of high-pressure reactors appropriate for high-pressure polymerization having a reactor inlet and having a reactor outlet. High-pressure reactors for use in the present technology are, for example, tubular reactors or autoclave reactors. Preferably the polymerization is carried out in one or more autoclave reactors or combinations of autoclave and tubular reactors. In particularly preferred embodiments of the present disclosure, the polymerization reactor is an autoclave reactor.

Common high-pressure autoclave reactors are stirred reactors and have a length-to- diameter ratio in a range from 2 to 30, preferably from 2 to 20. Such autoclave reactors have one or more reaction zones, preferably from 1 to 6 reaction zones and more preferably from 1 to 4 reaction zones. The number of reaction zones depends on the number of agitator baffles which separate individual mixed zones within the autoclave reactor. In high-pressure polymerization systems in which the polymerization or the first polymerization is carried out in an autoclave reactor, i.e. in high-pressure polymerization system in which the only polymerization reactor is an autoclave reactor or high-pressure polymerization system in which the first reactor of a series of reactors is an autoclave reactor, the reaction mixture coming from the compressors is usually first passed through a pre-cooler before entering the autoclave reactor.

The compression of the reaction gas composition to the polymerization pressure is carried out by one or more compressors in a sequence of compression stages, where preferably a primary compressor first compresses the reaction gas composition to a pressure of from 10 MPa to 50 MPa and a secondary compressor further compresses the reaction gas composition to the polymerization pressure of from 110 MPa to 500 MPa. Preferably the primary compressor and the secondary compressor are multistage compressors. It is further possible to separate one or more stages of one or both of these compressors and divide the stages into separated compressors. However, usually a series of one primary compressor and one secondary compressor is used for compressing the reaction gas composition to the polymerization pressure. In such cases, sometimes the whole primary compressor is designated as primary compressor. However, it is also common to designate the one or more first stages of the primary compressor, which compress the recycle gas from the low- pressure product separator to the pressure of the fresh ethylene feed, as the booster compressor and then only the one or more subsequent stages as the primary compressor, although the booster compressor and the subsequent stages are all part of one apparatus.

In a preferred embodiment of the present disclosure, the high-pressure polymerization system comprises a pre-heater upstream of the reactor for heating the reaction gas composition to a temperature capable of initiating the polymerization. In a preferred embodiment of the present disclosure the entire reaction gas composition provided by the secondary compressor is fed via a pre-heater to the inlet of the reactor.

The high-pressure polymerization system for carrying out the polymerization of the present disclosure preferably comprises, besides the polymerization reactor and the rector blow down system, two or more gas recycle lines for recycling unreacted monomers into the polymerization process. The reaction mixture obtained in the polymerization reactor is transferred to a first separation vessel, frequently called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the secondary compressor. In the high-pressure gas recycle line, the gas is usually purified by several purification steps for removing undesired components such as entrained polymer or oligomers. The liquid fraction withdrawn from the first separation vessel, which usually still comprises dissolved monomers such as ethylene and comonomers in an amount of 20 to 40% of weight, is transferred to a second separation vessel, frequently called low-pressure product separator, and further separated, at reduced pressure, usually at an absolute pressure in the range of from 0.1 MPa to 0.5 MPa, in polymeric and gaseous components. The gaseous fraction withdrawn from the second separation vessel is fed via a so-called low-pressure gas recycle line to the primary compressor, preferably to the foremost of the stages. Also the low-pressure gas recycle line usually comprises several purification steps for purifying the gas from undesired components. The high-pressure polymerization system can further comprise additional separation steps for separating additional gaseous fractions from the reaction mixtures and additional gas recycle lines for feeding such additional gaseous fractions comprising not reacted monomers to one of the compressors, for example in-between the first separation step and the second separation step operating at an intermediate pressure.

Preferably, the recycled gas coming from the low-pressure gas recycle line is compressed by the first stages of the primary compressor to the pressure of the fresh feed of ethylenically unsaturated monomers, preferably ethylene, and thereafter combined with the fresh gas feed and the combined gases are further compressed in the primary compressor to the pressure of from 10 MPa to 50 MPa. Preferably the primary compressor comprises five or six compression stages, two or three before adding the fresh gas and two or three after adding the fresh gas. The secondary compressor has preferably two stages; a first stage, which compresses the gas to a pressure in the range from 50 MPa to 150 MPa, and a second stage, which further compresses the gas to the final polymerization pressure.

The pressure within the polymerization reactor is preferably controlled by a pressure control valve, which is arranged at the outlet of the polymerization reactor and through which the reaction mixture leaves the reactor. The pressure control valve can be any valve arrangement which is suitable for reducing the pressure of the reaction mixture leaving the reactor to the pressure within the first separation vessel.

In a preferred embodiment of the present disclosure, the high-pressure polymerization system comprises a post reactor cooler downstream of the polymerization reactor for cooling the reaction mixture. The post reactor cooler can be arranged upstream of the pressure control valve or the post reactor cooler can be arranged downstream of the pressure control valve. Preferably, the post reactor cooler is arranged downstream of the pressure control valve.

Preferred polymerization reactors are located in a chamber having a surrounding protective wall.

The polymeric components obtained by the polymerization are finally transformed into pellets, normally by apparatuses like extruders or granulators. Preferably, the ethylene-based polymer produced by the process is a LDPE having a density in the range from 0.910 g/cm³ to 0.960 g/cm³, preferably having a density in the range from 0.910 g/cm³ to 0.940 g/cm³.

Besides the continuously operable polymerization reactor, the process of the present disclosure comprises
b) a reactor blow down system adapted and arranged to be in fluid communication with the polymerization reactor, the reactor blow down system comprising
b1) a reactor blow down vessel, which contains an aqueous quenching medium;
b2) one or more release lines, which connect the polymerization reactor with the reactor blow down vessel and which comprise a release line outlet for expanding a content of the high-pressure polymerization system comprising polymer and gaseous components into the reactor blow down vessel, where the release line outlets are located above a maximum level for the aqueous quenching medium,
wherein the one or more release lines are provided with a rupture disc that automatically allows the content of the high-pressure polymerization system to pass through the one or more release lines into the reactor blow down vessel, if a predetermined pressure threshold in the reactor is exceeded.

In preferred embodiments, the reactor blow down vessel has an essentially circular design over a major portion P having a length L, a diameter D and a LID ratio in the range from 1.75 to 10.0, preferably in the range from 2.0 to 6.0 and in particular in the range from 2.0 to 4.0.

The release line may each have a joining piece which connects the release line with the major portion P of the reactor blow down vessel. In general, the joining pieces have a tubular, in particular cylindrical hollow space through which gaseous and polymeric material may enter the reactor blow down vessel. It is this tubular, in particular hollow space through which the central axis passes. The joining pieces have a central axis and are arranged in a way that an angle (α) formed between the central axis of the joining pieces and a tangent being located at the intersection of the central axis with the circular periphery of the major portion P of the reactor blow down vessel and having the same inclination as the central axis with respect to the horizontal plane containing this intersection is in the range from 5° to 70°, preferably in the range from 10° to 60°, and more preferably in the range from 15° to 50°.

In preferred embodiments of the present disclosure, one of the joining pieces, or a multitude of the joining pieces, or all of the joining pieces, and preferably all of the joining pieces are arranged essentially tangentially with regard to the horizontal circumference of said major portion P.

In preferred embodiments of the present disclosure, one of the joining pieces, or a multitude of the joining pieces, or all of the joining pieces, and preferably all of the joining pieces are inclined downwards such that the stream of the content of the high-pressure polymerization system comprising polymer and gaseous components is directed towards a surface of the aqueous quenching medium in the reactor blow down vessel.

In preferred embodiments of the present disclosure, one of the joining pieces, or a multitude of the joining pieces, or all of the joining pieces, and preferably all of the joining pieces have an angle of inclination (β) between the central axis of the joining pieces and horizontal planes passing through the major portion P of the reactor blow down vessel at the positions where the central axes cross the horizontal circumference of the major portion P is in the range from 3° to 89°, and preferably in the range from 5° to 45°.

The fluid communication between the polymerization reactor and the reactor blow down system can be provided by one or more release lines. Preferably, a multitude of release lines connects the polymerization reactor with the reactor blow down vessel. In this case, each of the release line may comprise a rupture disc which automatically ruptures when a predetermined pressure threshold is exceeded in the reactor.

The at least one release line may be split into two arms, wherein each arm has a joining piece which connects the release line with the major portion P of the reactor blow down vessel. Preferably, the arms are connected with the major portion P at opposite sides. In this embodiment, the high pressure fluid that is transferred from the reactor to the reactor blow down vessel through one release line may be split and enter the reactor blow down vessel from different sides. The fluid does thus not enter the reactor blow down vessel from one side, which would lead to strong forces acting on the reactor blow down vessel from said one side. However, if the stream is split and the fluid enters the reactor blow down vessel from opposing sides, the forces may compensate each other leading to a reduced strain of the reactor blow down vessel.

In preferred embodiments of the present disclosure, a multitude or all of the joining pieces of the release line outlets of the release lines connecting the polymerization reactor with the reactor blow down vessel are located on the same horizontal level of the major portion P of the reactor blow down vessel. Alternatively, or in particular additionally, a multitude or all of the joining pieces of the release line outlets of the release lines connecting the polymerization reactor with the reactor blow down vessel are equidistantly or evenly distributed over the, in particular horizontal, circumference of the major portion P of the reactor blow down vessel. In another embodiment, it is also possible that not all but only a limited set of joining pieces of the release line outlets of the release lines connecting the polymerization reactor with the reactor blow down vessel are evenly or equidistantly distributed over the, in particular horizontal, circumference of the major portion P of the reactor blow down vessel.

In preferred embodiments of the present disclosure, a multitude of the joining pieces of the release line outlets of the release lines connecting the polymerization reactor with the reactor blow down vessel are equidistantly or evenly distributed over the circumference of the major portion P of the reactor blow down vessel. Preferably, all joining pieces of the release line outlets of the release lines connecting the polymerization reactor with the reactor blow down vessel are equidistantly or evenly distributed over the circumference of the major portion P of the reactor blow down vessel. In another embodiment, it is also possible that not all but only a limited set of joining pieces of the release line outlets of the release lines connecting the polymerization reactor with the reactor blow down vessel are evenly or equidistantly distributed over the, in particular horizontal, circumference of the major portion P of the reactor blow down vessel.

In particularly preferred embodiments of the present disclosure, a multitude or all of the joining pieces of the release line outlets of the release lines connecting the polymerization reactor with the reactor blow down vessel are arranged in two or more sets of joining pieces which are located on two or more horizontal levels. In these embodiment, a first set of joining pieces of release line outlets of the release lines connecting the polymerization reactor with the reactor blow down vessel is located on the same horizontal level of the major portion P of the reactor blow down vessel, wherein preferably a multitude of said first set of joining pieces is equidistantly or evenly distributed over the circumference of the major portion P of the reactor blow down vessel, and at least one second set of joining pieces, preferably the remaining joining pieces, of release line outlets of the release lines connecting the polymerization reactor with the reactor blow down vessel is aligned horizontally on the major portion P of the reactor blow down vessel at a horizontal level different from the horizontal level of the first set of joining pieces, wherein preferably a multitude of said second set of joining pieces is equidistantly or evenly distributed over the circumference of the major portion P of the reactor blow down vessel. In some further embodiments, it is even preferred that not all joining pieces of the first or second set, or of the first and second set, of joining pieces belong to those joining pieces which are evenly or equidistantly distributed over the circumference of the major portion P of the reactor blow down vessel, but only a reduced number of these joining pieces.

In preferred embodiments of the present disclosure, the release lines, which connect the polymerization reactor with the reactor blow down vessel are heated. Preferably, the release lines are heated over the whole length including the joining pieces. The release lines are preferably heated to a temperature from 160°C to 240°C and more preferably heated to a temperature from 180°C to 220°C. The heating can occur electrically, preferably the heating is conducted by heating with medium-pressure steam, preferably by conveying the medium-pressure steam through heating jackets.

In order to prevent damage to the reactor, the predetermined pressure threshold at which the rupture disc ruptures may be about 10 to 700 bar, preferably 100 to 600 bar, more preferably 200 to 500 bar less than a design pressure of the reactor. The design pressure of the reactor is generally known and designates the maximum pressure that the reactor is ensured to endure. Thus, the design pressure is a parameter that is provided by the original equipment manufacturer.

A rapid depressurization, in particular for large reactors, when the total area of installed rupture discs per reactor volume is about 0.003 to 0.050 m²/m³, preferably 0.004 to 0.025 m²/m³, more preferably 0.005 to 0.017 m²/m³. Preferably, the number of rupture discs installed per reactor is about 1 to 8, preferably 1 to 6, more preferably 2 to 4. Each release line may comprise a single rupture disc. Preferably the rupture disc is formed at an end of the release line proximal to the reactor. The rupture disc may preferably cover the inlet of the release line preventing the reactor content from entering the release line when the rupture disc is intact. However, once the rupture disc ruptures as the predetermined pressure threshold is reached, the reactor content may immediately enter the release line and flow into the reactor blow down vessel. With the specific total area of installed rupture discs per reactor volume, it can be assured that the reactor may be depressurized from the predetermined pressure threshold to 100 MPa in less than 10 seconds, preferably less than 8 seconds, more preferably between 0.1 to 5 seconds. In particular, the reactor may be designed to be depressurized from predetermined pressure threshold to around 30 MPa in between 0.1 to 30 seconds, preferably 0.2 to 15 seconds.

The reactor may particularly be an autoclave reactor. However, the high pressure polymerization system may also comprise multiple reactors, such as a combination of an autoclave reactor and a tubular reactor. It is preferred that at least the autoclave reactor, or even only the autoclave reactor, comprises at least one release line with a rupture disc. Preferably, at least two release lines are provided, which are radially connected to the autoclave reactor at opposite sides of the autoclave reactor.

Once the rupture disc is ruptured, the rupture disc may be replaced. The maintenance effort for replacing the rupture disc may be greatly reduced, if the rupture disc is provided on an exchangeable module forming an end of the respective release line. The module may be detached from the remainder of the release line and replaced by another module with an intact rupture disc allowing for an easy and fast replacement of the rupture discs.

The one or more release lines may project into a radial opening of the reactor. The one or more release lines may project into the radial openings such that the rupture disc, which preferably forms an end of the release line is arranged flush with an inner surface of the reactor wall.

Alternatively, the one or more release lines may radially protrude into the volume of the reactor. In this embodiment, the one or more release lines may additionally serve as an anchor for securing components inside the reactor, such as an agitator which is coaxially mounted in the reactor. The agitator may be directly attached to the one or more release lines or may be secured via securing elements.

A first connecting line may be attached to the reactor outlet for allowing a fluid communication between the reactor and a post reactor cooler or a separation vessel, preferably the post reactor cooler. A pressure control valve may be provided, the pressure control valve being adapted and arranged to control the fluid communication between the continuously operated polymerization reactor and the post reactor cooler or separation vessel.

Furthermore, the first connecting line may comprise at least one, preferably two emergency valves adapted to open and close a fluid communication between the continuously operated polymerization reactor and the reactor blow down vessel via the first connecting line. If two emergency valves are provided, it is preferred that one emergency valve is installed upstream of the pressure control valve and one emergency valve is installed downstream of the pressure control valve. The emergency valves may serve as a primary safety measure for depressurizing the reactor at a first predetermined pressure threshold. However, if the pressure continues to rise in the reactor or the emergency valves fail, the rupture discs may serve as a failsafe ensuring that the pressure inside the reactor does not reach the design pressure.

In preferred embodiments, the reactor blow down vessel may have an essentially circular design over a major portion P having a length L, a diameter D and a L/D-ratio in the range from 1.75 to 10.0, preferably in the range from 2.0 to 6.0, and in particular in the range from 2.0 to 4.0, and which contains an aqueous quenching medium.
the reactor blow down system further comprises
b4) a nitrogen blanketing system and/or
b5) a fil-level control system.

The reactor blow down vessel b1) may further comprises a vent stack which serves as gas outlet for removing the gaseous components having been separated from the aqueous polymer slurry. The vent stack is characterized in that it contains a constricted section, e.g. a throttle. In preferred embodiments of the present disclosure, the vent stack is a vertical tube having an inner diameter from 0.4 m to 1.4 m, more preferably from 0.5 m to 1.1 m and in particular from 0.7 m to 0.9 m. The constricted section of the vent stack has preferably a smaller inner diameter than the vertical tube so that the open cross-sectional area at the constricted section is from 10% to 60%, more preferably from 15% to 50% and in particular from 15% to 50% of the open cross-sectional area of the vertical tube. In preferred embodiments of the present disclosure, the upper opening of the vent stack is from 20 m to 80 m above ground level, more preferably from 30 m to 60 m above ground level, and in particular from 40 m to 50 m above ground level.

Preferably, the reactor blow down vessel is nitrogen blanketed although being open to the atmosphere.

In preferred embodiments of the present disclosure, the reactor blow down system further comprises
b6) a reactor blow down dump vessel arranged and adapted to be in fluid communication with the reactor blow down vessel, and
b7) at least one drain valve in the fluid communication between the reactor blow down vessel and the reactor blow down dump vessel adapted and arranged to open or close the fluid communication between the reactor blow down vessel and with the reactor blow down dump vessel,
wherein the reactor blow down vessel is installed above the reactor blow down dump vessel.

The present disclosure further provides a process for polymerizing ethylene, and optionally one or more comonomers, to obtain an ethylene-based polymer in a high-pressure polymerization system according to any of the above-mentioned embodiments,
wherein the process comprises the steps of
A) monitoring the high-pressure polymerization system with respect to an occurrence of a disturbance, and
B) automatically releasing the content of the reactor into the reactor blow down vessel if a predetermined pressure threshold is exceeded;
C) contacting said content in the reactor blow down vessel with the aqueous quenching medium to obtain an aqueous polymer slurry; and
D) separating the aqueous polymer slurry and the gaseous components.

In preferred embodiments, the process further comprises the step of opening at least one emergency valve in case of a disturbance to allow the content of the polymerization system comprising polymer and gaseous components to expand into the reactor blow down vessel via the first connecting line between step A) and B). Thus, the high-pressure polymerization system is monitored with respect to an occurrence of a disturbance. In case of a disturbance, the least first emergency valve is opened and the content of the polymerization system comprising polymer and gaseous components is expand into the reactor blow down vessel. In this way, the high-pressure polymerization is interrupted in a controlled manner. Accordingly, a disturbance in the context of the present disclosure is any deviation of the normal polymerization conditions which is deemed significant enough that the polymerization has to be terminated. The monitoring of the high-pressure polymerization system occurs by measuring various parameters with respect to the conditions of the high-pressure polymerization system. These parameters include pressures and temperatures at various positions of the polymerization system, filling levels of vessels, positions of valves, hydrocarbon concentrations in the surrounding of the high-pressure polymerization system and vibrations in the polymerization system. If one of these parameters deviates significantly from the normal values, for example by differing more than 10% from a usually measured value, an occurrence of a disturbance is established and the at least one emergency valve is opened.

In preferred embodiments of the present disclosure, the process further comprises
E) transferring the aqueous polymer slurry to the reactor blow down dump vessel by opening the at least one drain valve.

In some embodiments, upon the occurrence of a disturbance or temporally offset to the occurrence of a disturbance, in particular with a delay in the range from 2 to 30 seconds, more in particular in the range from 4 to 16 seconds, steam, preferably medium pressure steam, is injected into the reactor blow down vessel, in particular via the vent stack.

In some embodiments, the injection of steam into the reactor blow down vessel, in particular via the vent stack, is suspended after about 120 to 300 seconds, preferably after about 140 to 220 seconds, upon the occurrence of a disturbance.

In some embodiments of the present disclosure, the at least one drain valve is opened to transfer the aqueous polymer slurry to the reactor blow down dump vessel after the first emergency valve or any combination of previously open emergency valves have been closed. In a suitable embodiment of the present disclosure, the at least one drain valve is remotely operated or operable.

In another embodiment, the at least one drain valve is opened to transfer the aqueous polymer slurry to the reactor blow down dump vessel after the first emergency valve or any combination of previously open emergency valves have been closed.

In preferred embodiments of the present disclosure, following an occurrence of a disturbance, the polymerization is restarted after the reactor blow down vessel has been emptied, for example by transferring the aqueous polymer slurry to a reactor blow down dump vessel.

In preferred embodiments of the present disclosure, the first emergency valve or any combination of previously open emergency valves are closed again as long as the fluid communication system, or the fluid communication system and the third connecting line and/or fourth connecting line are experiencing a positive pressure.

In preferred embodiments of the present disclosure, the reactor blow down vessel and the reactor blow down dump vessel are inside a protective enclosure, frequently called "reactor bay", and/or wherein the blow down separator or the combination of blow down separator elements and/or the circulation pump or the circulation pumps are outside a protective enclosure.

The aqueous quenching medium in most cases is water. In some cases, for example for the production of ethylene copolymers, the aqueous quenching medium in addition to water also comprises at least one polymerization inhibitor such as hydroquinone or pH buffer agents. Buffer agents comprise for example phosphate buffers, e.g. obtained by mixing sodium hydrogen phosphate and sodium hydroxide.

With the process of the present disclosure, the content of the polymerization system is expanded into the reactor blow down vessel and contacted with the aqueous quenching system. In this manner, the pressure in the continuous high-pressure polymerization system can be rapidly reduced, e.g. within a minute or even less from the predetermind pressure treshhold to 0.1 MPa. While the gaseous components are released from this vessel, the water/polymer mixture can be removed from the reactor blow down dump vessel. With the specific total area of installed rupture discs per reactor volume, it can be assured that the high pressure polymerization system may be depressurized from the predetermined pressure threshold to 100 MPa in less than 10 seconds, preferably less than 8 seconds, more preferably between 0.1 to 5 seconds. In particular, the system may be designed to be depressurized from predetermined pressure threshold to around 30 MPa in between 0.1 to 30 seconds, preferably 0.2 to 15 seconds.

Further features and advantages of the present disclosure will become apparent from the following description, in which exemplary embodiments of the disclosure are explained with reference to schematic drawings, by way of example and without limiting the disclosure.

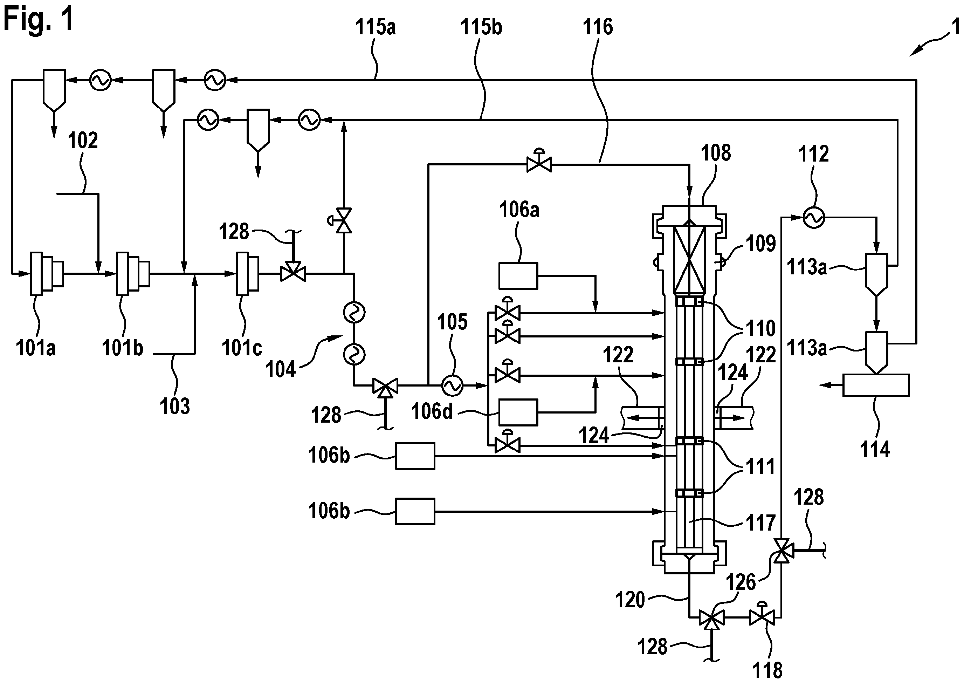

Figure 1 shows a schematic set-up of a polymerization apparatus according to an exemplary embodiment of the present disclosure. Process gas comprising a mixture of ethylenically unsaturated monomer or a mixture of ethylenically unsaturated monomer and one or more copolymers is compressed in a series of compressors with a booster compressor (100a), a primary compressor (100b) and a hyper compressor (100c). Fresh ethylenically unsaturated monomer, chain transfer agents (CTA) and/or comonomer may be introduced via feed lines (102) and (103), respectively. The compressed process gas is conveyed to a cooler system (104), optionally pre-heated in a start-up heater (105) and introduced into the polymerization reactor (108) via feed lines (116). Part of the process gas is premixed with the polymerization initiator, which is provided by pumps (106a) and (106b). The polymerization reactor (108) in this exemplary embodiment is in the form of a continuously operated autoclave reactor equipped with a motor (109) and agitator baffle plates (111) which divide the reactor into different reaction zones. The reactor (108) further comprises mixing elements (110) installed on an agitator shaft (117) for mixing the contents of the reactor (108).

The reaction mixture may leave the polymerization reactor (108) through connecting line (120), which is equipped with a pressure control valve (118), and passes a post reactor cooler (112). Thereafter, the resulting polymer is separated off from unreacted ethylene and other low molecular weight compounds (monomers, oligomers, polymers, additives, solvent etc.) by means of a first separation vessel (113a) and a second separation vessel (113b), discharged and pelletized via an extruder and granulator (114).

The ethylene and comonomers, which have been separated off in the first separation vessel (113a), are fed back to the reactor (108) via high-pressure circuit (115b). In the high-pressure circuit (115b), the gaseous material separated from the reaction mixture is first freed from other constituents in at least one purification stage and then added to the monomer stream between primary compressor (101b) and hyper compressor (101c). The high-pressure circuit (115b) may separate the solvent from waxes.

The ethylene, which has been separated off in the second separation vessel (113b), which further comprises, inter alia, the major part of the very low molecular weight products of the polymerization (oligomers) and solvent, is worked up in a low-pressure circuit (115a) comprising a plurality of separators with heat exchangers being arranged between each of the separators. Fig. 1 shows two purification stages consisting of heat exchangers and separators. It is however also possible to use only one purification stage or preferably more than two purification stages. The low-pressure circuit (115a) usually separates oils, solvent and waxes. The worked up ethylene is first compressed in the booster compressor (101a) and returned to the primary compressor (101b).

Under certain temperature and pressure conditions ethylene can decompose rapidly in an explosive manner to give soot, methane and hydrogen. Associated therewith is a drastic increase in pressure and temperature. The decomposition temperatures can be excessively high (>1000°C) which presents a considerable potential risk for the operational safety of the production plants. For example, the temperatures reached during such a decomposition event can damage the reactor tubes, e.g. it may cause the tube metal to austenize. At temperatures at which the metal austenizes, martensite is being formed in the reactor tubes, if the material is cooled rapidly. Martensite is the hardest and most brittle of the various microstructures found in carbon steels.

In order to rapidly depressurize the reactor (108), e.g. in case of decomposition, one or more release lines (122), which connect the polymerization reactor (108) with a reactor blow down vessel and which comprises a release line outlet for expanding a content of the high pressure polymerization system comprising polymer and gaseous components into the reactor blow down vessel, where the release line outlets are located above a maximum level for the aqueous quenching medium. Each release line (122) is provided with a rupture disc (124) that automatically allows the content of the high-pressure polymerization system to pass through the respective release line (122) into the reactor blow down vessel, if a predetermined pressure threshold in the reactor is exceeded.

Furthermore, the connecting line (120) may be equipped with emergency valves (126) adapted to open and close a fluid communication between the polymerization reactor (108) and the reactor blow down vessel via arms (128) that branch off the connecting line (120). Preferably, two emergency valves are provided, wherein one emergency valve (126) is positioned on connecting line (120) between the pressure control valve (118) and an outlet of the reactor (108). The other emergency valve (126) may be positioned on the connecting line (120) between the pressure control valve (118) and the post reactor cooler (112). The emergency valves may serve as a primary safety measure for depressurizing the reactor at a first predetermined pressure threshold. However, if the pressure and/or temperature continues to rise in the reactor or the emergency valves fail, the rupture discs (124) may serve as a failsafe ensuring that the pressure inside the reactor does not reach the design pressure. In addition, one or more emergency valves may be provided upstream of the reactor (108) and downstream of the hyper compressor (101c) adapted to open and close a fluid communication between the compressors and the blow down vessel via arms (128) that branch off the line between the hyper compressor (101c) and the reactor (108).

In the embodiment shown in Fig. 1, the rupture discs (124) are arranged at an end of the release line (122). The release line (122) protrude into the wall of the reactor (108) such that a front face of the rupture discs (124) is arranged essentially flush with an inner surface of the reactor wall. Thus, accumulation of polymer material or fines around the release line may be prevented.

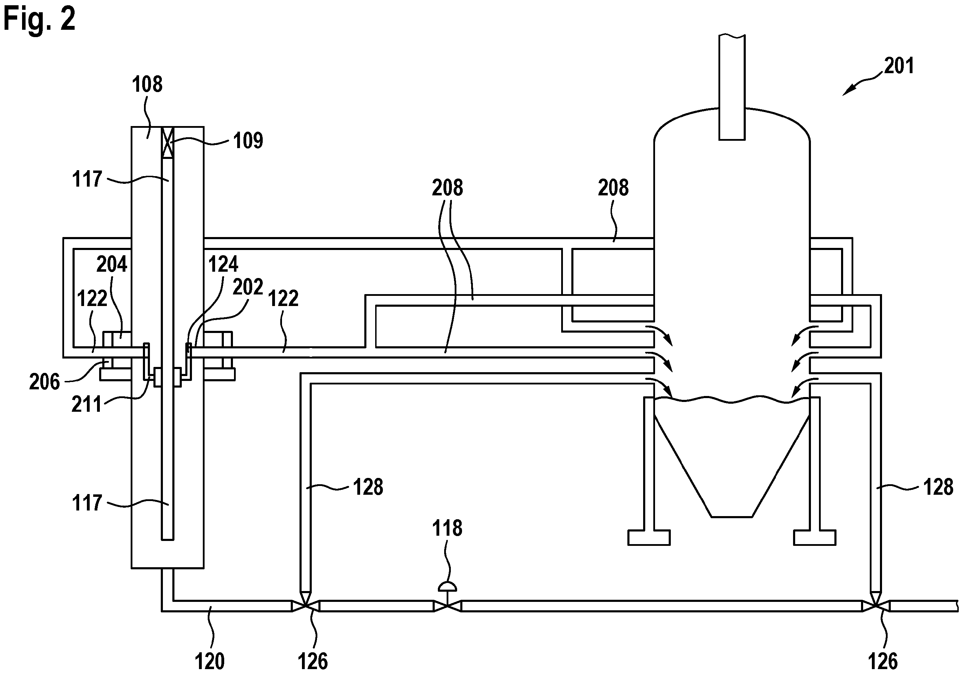

Fig. 2 shows a schematic view of a setup of the polymerization reactor (108) being connected to a reactor blow down system (201) via the release lines (122). In this embodiment, each release line (122) has a front end projecting radially into the reactor. As can be seen in Fig. 2, at least two release lines (122) may be provided, the at least two release lines being arranged opposite to one another with respect to a vertical axis of the reactor (108). The front end may be formed by a replaceable module (202) comprising the rupture disc (124). Thus, once the rupture disc (124) ruptures, it is no longer necessary to replace the entire release line (122) but sufficient to replace the module (202) with another module (202) having an intact rupture disc (124).

The release line (122) may project into the volume of the reactor (108) whereby the release lines (122) may further serve as an anchor for securing the agitator shaft (117) within the reactor. For this, attachment means (211) may be provided attaching the agitator shaft (117) to the release lines (122).

Each release line (122) may be mounted to a mounting collar (204) via a flange (206). Preferably, each release line (122) is split into two arms (208), which are each attached to a reactor blow down vessel (210) at positions arranged circumferentially distanced from one another.

The release lines (122) are adapted to depressurize the reactor (108) in case a predetermined pressure value is exceeded. Once the predetermined pressure value is exceeded, the rupture discs burst opening the passage through the release lines (122) into the reactor blow down vessel (210). Each arm comprises a joining piece (212) which connects the respective arm to the reactor blow down vessel forming the respective release line outlets (214).

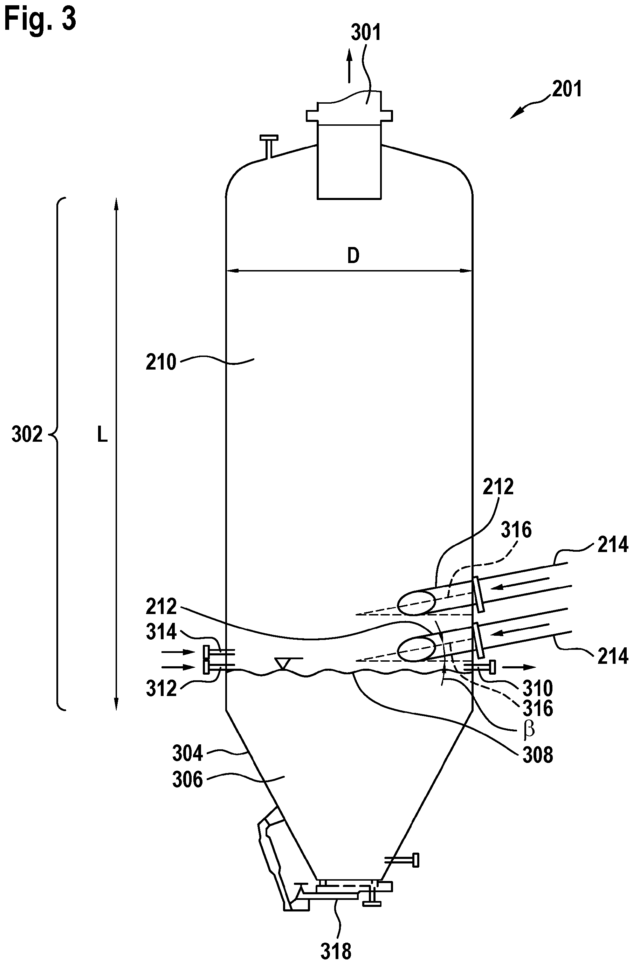

Fig. 3 shows schematically one possible set-up of a reactor blow down system (201) of the present disclosure comprising a reactor blow down vessel (210), release line outlets (214) and a vent stack (301). In this schematic drawing only two release line outlets (214) are shown. However, it is understood that the number of release line outlets (214) may be more than two as is shown in Fig. 2. Preferably, the number of release line outlets (214) is even, wherein the release line outlets are distributed along the circumference of the reactor blow down vessel. The reactor blow down vessel (210) has a cylindrical portion having a length L which is designated "major portion P" (302). Said major portion P (302) has a diameter D. In the schematic representation of Fig. 3 the major portion P (302) has an LID ratio of about 2.1. Above said major portion P (302), the reactor blow down vessel (210) comprises a tapered lid-like portion the center part of which is equipped with the lower part of the vent stack (301). The lower part (304) of the reactor blow down vessel (210) has a conical shape and in use comprises the aqueous quenching medium (306). In the embodiment depicted in Fig. 3, the surface (308) of the aqueous quenching medium (306) is lying beneath the overflow valve (310). The aqueous quenching medium (306) can be added to the reactor blow down vessel (210) via water inlet valve (312). Nitrogen for blanketing the reactor blow down vessel can be introduced through nitrogen inlet (314). The release line outlets (214) each comprise a joining piece (212) and (212), respectively, through which hot gas and hot polymer enters into the reactor blow down vessel (210) in case of a disturbance of the polymerization process occurring, for example, at the polymerization reactor. The joining pieces (212) are oriented in such a manner that the angle of inclination (β) between the central axes (316) of the respective joining pieces (212), respectively, and the horizontal plane passing through the major portion P (302) of the reactor blow down vessel (210) where said central axes (316), respectively, cross the horizontal circumference of said major portion P (302) is about 12° in each case in the embodiment shown in Fig. 3. Moreover, with the embodiment of the reactor blow down system (201) of Fig. 3, the joining pieces (212) are arranged essentially tangentially with regard to the horizontal circumference of said major portion P (302). At the bottom of the conically shaped lower part (304) of the reactor blow down vessel (210), there is an outlet (318) which can be remotely opened and closed and through which sedimented polymer can be removed.

Surprisingly it was found that in case of a disturbance or even an emergency, e.g. due to the reactor pressure and/or the reactor temperature being above safe threshold values, the hot gas flows and the hot polymerization material of the polymerization reactor can be effectively quenched and cooled. Accordingly, with the high-pressure polymerization system according the present disclosure the momentum of the gas and material flow is significantly attenuated in a controlled manner resulting in a good quenching of the polymer / gas mixture in the reactor blow down vessel without releasing significant amounts of polymeric material or even without releasing essentially any amounts of polymeric material into the atmosphere via the vent stack. The polymeric material can be efficiently and comprehensively separated from the quenched reactor content comprising both hot ethylene and hot polymer in the reactor blow down vessel so that essentially all solids can be retained.

With the process and the high-pressure polymerization system of the present disclosure, the reactor can be automatically depressurized by automatically rupturing the rupture discs in case of any disturbance or emergency thereby putting the reactor into safe condition, if a predetermined pressure value is exceeded. That is, polymerization can not only be stopped safely in case of an emergency like fire, explosion, earthquake or polyethylene decomposition but also if deviations, i.e. disturbances, from the standard operating conditions, e.g. by exceeding pre-defined threshold values, are detected.

Other features, advantages and embodiments of the subject matter of the present disclosure disclosed herein will be readily apparent to those exercising ordinary skill after reading the foregoing disclosure. In this regard, while specific embodiments of the subject matter of the present disclosure have been described in considerable detail, variations and modifications of these embodiments can be effected without departing from the spirit and scope of the disclosure as described and claimed.

### REFERENCE NUMERALS

- 1: High pressure polymerization system
- 101a,b,c: booster, primary and secondary compressor
- 102: feed line
- 103: feed line
- 104: cooler system
- 105: pre-heater
- 106a,b: pump
- 108: polymerization reactor
- 109: motor
- 110: mixing elements
- 111: agitator baffle plates
- 112: post reactor cooler
- 113a,b: first and second separation vessel
- 114: extruder and granulator
- 115a,b: low-pressure and high-pressure circuit
- 116: feed line
- 117: agitator shaft
- 118: pressure control valve
- 120: connecting line
- 122: release line
- 124: rupture disc
- 126: emergency valve
- 128: arm
- 201: reactor blow down system
- 202: replaceable module
- 204: mounting collar
- 206: flange
- 208: arm
- 210: blow down vessel
- 211: attachment means
- 212: joining piece
- 214: release line outlets
- 301: vent stack
- 302: major portion
- 304: lower part
- 306: aqueous quenching medium
- 308: surface
- 310: overflow valve
- 312: water inlet valve
- 314: nitrogen inlet valve
- 316: cental axis

## Claims

1. A high-pressure polymerization system (1) comprising
a) a continuously operable polymerization reactor (108) having a reactor inlet and having a reactor outlet and
b) a reactor blow down system (201) adapted and arranged to be in fluid communication with the polymerization reactor (108), the reactor blow down system (201) comprising
b1) a reactor blow down vessel (210), which contains an aqueous quenching medium (306),
b2) one or more release lines (122), which connect the polymerization reactor (108) with the reactor blow down vessel (210) and which comprise a release line outlet (214) for expanding a content of the high-pressure polymerization system (1) comprising polymer and gaseous components into the reactor blow down vessel (210), where the release line outlets (214) are located above a maximum level for the aqueous quenching medium (306), and
wherein the one or more release lines (122) are provided with a rupture disc (124) that automatically allows the content of the high-pressure polymerization system (1) to pass through the one or more release lines (122) into the reactor blow down vessel (210), if a predetermined pressure threshold in the reactor is exceeded.

2. The high-pressure polymerization system of claim 1, wherein the high-pressure polymerization system is depressurized from the predetermined pressure threshold to 100 MPa in less than 10 seconds, preferably less than 5 seconds.

3. The high-pressure polymerization system of claim 1 or 2, wherein the predetermined pressure threshold may be about 10 to 700, preferably 100 to 600, more preferably 200 to 500 bar less than a design pressure of the reactor.

4. The high-pressure polymerization system of any one of claims 1 to 3, wherein a total area of installed rupture discs per reactor volume may be about 0.003 to 0.050 m²/m³, preferably 0.004 to 0.025 m²/m³, more preferably 0.005 to 0.017 m²/m³.

5. The high-pressure polymerization system of any one of claims 1 to 4, wherein the number of rupture discs is about 1 to 9, preferably 1 to 6, more preferably 2 to 4.

6. The high-pressure polymerization system of any one of claims 1 to 5, wherein the reactor is an autoclave reactor or a combination of an autoclave reactor and a tubular reactor.

7. The high-pressure polymerization system of any one of claims 1 to 6, wherein the rupture disc is provided on an exchangeable module forming an end of the one or more release lines.

8. The high-pressure polymerization system of any one of claims 1 to 7, wherein the one or more release lines project into a radial opening of the reactor.

9. The high-pressure polymerization system of claim 8, wherein, the rupture disc is arranged inside the reactor. The rupture disc may for example close the radial opening of the reactor and be flush with the inner reactor wall. In particular, the rupture disc may be arranged at the end of the release line connected to the reactor.

10. The high-pressure polymerization system of claims 8 or 9, wherein, an agitator is provided, the agitator being coaxially mounted in the reactor, wherein the agitator is secured to the one or more release lines, or components of the one or more release line protruding into the reactor.

11. The high-pressure polymerization system of any one of claims 1 to 10, wherein the polymerization system may further comprise a connecting line for connecting the polymerization reactor with a post-reactor cooler, and wherein the connecting line is provided with one or more first emergency valves adapted to open and close a fluid communication between the polymerization reactor and the reactor blow down system.

12. The high-pressure polymerization system of any one of claims 1 to 11, wherein the release lines which connect the polymerization reactor with the reactor blow down vessel are heated to a temperature from 160°C to 240°C.

13. The high-pressure polymerization system of any one of claims 1 to 11, wherein the one or more release lines are split into at least two arms, which are connected to the reactor blow down vessel at different positions.

14. A process for polymerizing ethylene, and optionally one or more co-monomers, to obtain an ethylene-based polymer in a high-pressure polymerization system as defined in the above comprising
A) monitoring the high-pressure polymerization system with respect to an occurrence of a disturbance, and
B) automatically releasing the content of the reactor into the reactor blow down vessel if a predetermined pressure threshold is exceeded;
C) contacting said content in the reactor blow down vessel with the aqueous quenching medium to obtain an aqueous polymer slurry; and
D) separating the aqueous polymer slurry and the gaseous components.

15. The process of claim 14, wherein the process further comprises
E) transferring the aqueous polymer slurry to a reactor blow down dump vessel by opening the at least one drain valve.
